# DEMANDE DE BREVET EUROPEEN

(11) **EP 0 600 811 A1**
(43) Date de publication de la demande: **08.06.1994**
(21) Numéro de dépôt: 93420476.9
(22) Date de dépôt: 29.11.1993
(51) Int. Cl.: H01H 43/10, F16D 15/00, F16D 11/12

(54) **Programmateur à affichage doux**

(30) Priorité: 04.12.1992 FR 9214794
(71) Demandeur: CROUZET Electroménager, F-26000 Valence (FR)
(72) Inventeur: Vollot, Jean, F-07800 St. Georges-les-Bains (FR); Migliorero, Marie, F-26300 Charpey (FR)
(74) Mandataire: de Beaumont, Michel

(57) **Abrégé**

La présente invention concerne un programmateur à affichage doux comprenant : un bouton d'affichage (12) guidé en rotation par un axe (15) ; une pièce (17) mobile coulissant sur ledit axe (15) et couplée en rotation au mécanisme rotatif du programmateur ; et un ressort (21) sollicitant la pièce mobile (17) vers une position de repos où la pièce mobile est couplée en rotation au bouton d'affichage (12). Un système à rampes (12-2) assure le désaccouplage de la pièce mobile et du bouton d'affichage lorsque ce-dernier est entraîné en rotation dans un sens prédéterminé. Une bille (25) est librement mobile dans un alésage radial (15-1) de l'axe du bouton d'affichage et susceptible d'être poussée, sans qu'elle sorte complètement de l'alésage radial, dans un évidement radial (17-2) de la pièce mobile par le coulissement d'une tige pointue (27) dans un perçage axial (15-2) de l'axe.

## Description

La présente invention concerne les programmateurs, par exemple de machine à laver, et plus particulièrement un mécanisme de programmateur dit "à affichage doux".

Dans la plupart des machines à laver, un utilisateur doit, pour sélectionner un programme de lavage, afficher celui-ci à l'aide d'un bouton rotatif de programmateur. L'entraînement en rotation du bouton est dur car on entraîne en même temps un mécanisme comprenant un grand nombre de cames agissant sur des contacts à ressort. En outre, l'existence parfois de points durs juste avant une position de début de programme entraîne un risque de dépassement de cette position de début de programme, dû à l'effort plus important que l'on fournit pour franchir le point dur. Si la position choisie est dépassée, on doit effectuer un tour complet du programmateur pour essayer d'atteindre de nouveau la position choisie, car on ne peut tourner le programmateur que dans un seul sens.

Pour éviter ces inconvénients, certains fabricants proposent des mécanismes de programmateur dits "à affichage doux". Dans un tel mécanisme, le bouton d'affichage n'est pas solidaire en rotation du programmateur et peut donc être tourné avec facilité et précision. Lorsque l'utilisateur affiche un programme à l'aide du bouton, le programmateur, entraîné par un moteur, suit plus lentement la rotation du bouton et s'arrête lorsque sa position correspond à celle du bouton.

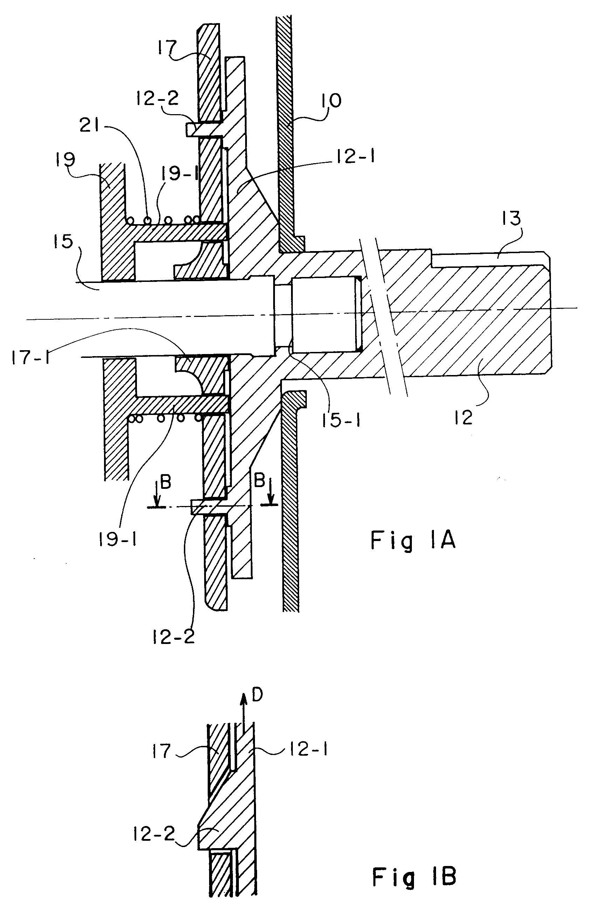

Les figures 1A et 1B représentent deux vues partielles en coupe d'un mécanisme classique à affichage doux. La figure 1B représente une section selon la ligne B-B de la figure 1A.

Une paroi 10 de façade de machine à laver est traversée par un axe 12, généralement en matière plastique, dont l'extrémité apparente (droite), munie de cannelures 13, est destinée à recevoir un bouton d'affichage (non-représenté).

L'axe 12 est solidaire d'un axe 15 de plus faible diamètre, appartenant au mécanisme, non-représenté, d'un programmateur ; la fixation est assurée par une gorge 15-1 et un moletage non représenté. L'axe 12 comprend un flasque 12-1 s'appuyant sur la face intérieure de la paroi 10 (à gauche de la figure). Un disque 17, parallèle au flasque 12-1, comprend un palier 17-1 permettant une translation, et le cas échéant une rotation, du disque 17 par rapport à l'axe 15. Le disque 17 est couplé au mécanisme rotatif du programmateur, par exemple à une pièce 19 couplée à ce mécanisme et libre en rotation par rapport à l'axe 15, par l'intermédiaire de secteurs de bague 19-1 coaxiaux à l'axe 15 et pénétrant dans des ouvertures correspondantes du disque 17.

Un ressort 21, s'appuyant par exemple entre la pièce 19 et le disque 17, sollicite ce dernier vers le flasque 12-1. Dans la position de repos des figures 1A et 1B, des dents 12-2 du flasque 12-1, coaxiales à l'axe 15, pénètrent dans des orifices correspondants du disque 17. Comme cela est mieux visible à la figure 1B, les dents 12-2 sont, d'un côté correspondant à un premier sens de rotation, munies d'une arête raide et, d'un autre côté correspondant à un deuxième sens de rotation, munies d'une rampe. Ce deuxième sens de rotation sera oonsidéré ci-après comme le sens des aiguilles d'une montre.

De préférence, les dents 12-2 et les orifices correspondants du disque 17 ne sont pas régulièrement distribués le long d'un cercle, de manière que l'axe 12 ne puisse avoir qu'une seule position d'engagement avec le disque 17.

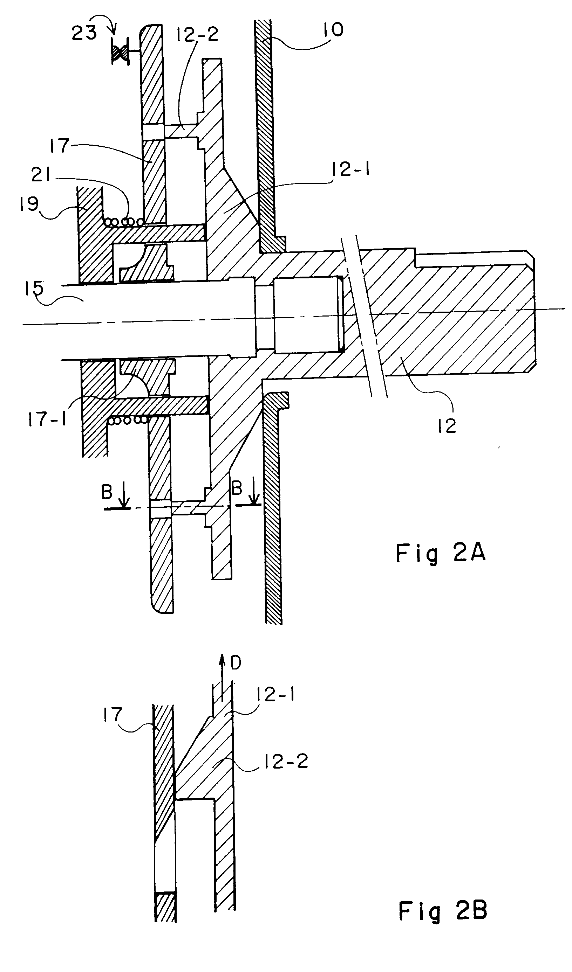

Lorsque l'axe 12 est tourné dans le sens des aiguilles d'une montre, sens indiqué par une flèche D dans la figure 1B, les rampes des dents 12-2 écartent le disque 17 du flasque 12-1 à l'encontre du ressort 21, le couple résistant fourni par le mécanisme rotatif du programmateur étant trop important pour que l'effort tangentiel alors exercé par les rampes entraine le disque 17 en rotation. Si l'on tourne suffisamment l'axe 12, les dents 12-2 se dégagent des orifices correspondants du disque 17 et l'on se retrouve dans le cas des figures 2A et 2B.

Dans les figures 2A et 2B, représentant une position de travail du mécanisme à affichage doux des figures 1A et 1B, les sommets des dents 12-2 se trouvent en appui sur une face (droite) du disque 17. Le disque 17 a été séparé du flasque 12-1 d'une quantité égale à la hauteur des dents 12-2 en comprimant le ressort 21. Dans cette position, le disque ferme un couple de contacts 23 qui actionne un moteur d'entraînement du mécanisme du programmateur dans le sens des aiguilles d'une montre pour rattraper la rotation infligée à l'axe 12.

Dans la configuration des figures 2A et 2B, l'entraînement en rotation de l'axe 12 par un utilisateur se fait facilement et sans à-coup. Un mécanisme à encliquetage peut même être prévu pour repérer avec précision les positions de début de programme. Une fois que l'utilisateur a affiché un programme, le mécanisme du programmateur est entraîné jusqu'à ce que les orifices du disque 17 correspondent à leurs dents respectives 12-2. Alors, le disque 17 retrouve sa position de repos contre le flasque 12-1 en ouvrant les contacts 23 pour arrêter l'entraînement du mécanisme rotatif du programmateur.

Les mécanismes à affichage doux présentent l'inconvénient qu'ils ne permettent pas de vérifier facilement pas par pas le programmateur. Avec un mécanisme d'entraînement direct, on peut avancer le programmateur pas par pas car, en tournant le bouton, on sent les franchissements de pas. Par contre, ceci est particulièrement difficile et fastidieux avec un mécanisme à affichage doux ne permettant pas de sentir les pas. Une opération de vérification pas par pas d'un programmateur est souvent effectuée lors d'un test de produit fini ou en cas de dépannage. Dans ces situations il n'est pas envisageable de démonter des panneaux de la machine pour atteindre et bloquer le mécanisme à affichage doux par un quelconque artifice.

Certains fabricants de programmateurs proposent, pour les tests de produit fini, un mécanisme à affichage doux bloqué par une pièce que l'on retire en tirant sur une ficelle une fois que l'on a terminé la vérification du programmateur. Le mécanisme à affichage doux ne peut plus être bloqué par la suite, par exemple lors d'un dépannage.

En outre, la ficelle peut être retirée intempestivement lors du transport des machines et il faut prendre des précautions particulières lors du montage des machines pour ne pas coincer la ficelle.

Un objet de la présente invention est de prévoir un dispositif de blocage réversible d'un mécanisme à affichage doux que l'on puisse activer à tout instant de manière simple.

Pour atteindre cet objet, la présente invention prévoit un programmateur à affichage doux comprenant : un bouton d'affichage guidé en rotation par un axe ; une pièce mobile coulissant sur ledit axe et couplée en rotation au mécanisme rotatif du programmateur ; et un ressort sollicitant la pièce mobile vers une position de repos où la pièce mobile est couplée en rotation au bouton d'affichage. Un système à rampes est associé au bouton d'affichage et à la pièce mobile pour séparer la pièce mobile du bouton d'affichage lorsque le bouton d'affichage est entraîné en rotation dans un sens prédéterminé, de manière que le bouton d'affichage n'est alors plus couplé en rotation à la pièce mobile. Une bille est librement mobile dans un alésage radial de l'axe du bouton d'affichage et susceptible d'être poussée, sans qu'elle sorte complètement de l'alésage radial, dans un évidement radial de la pièce mobile par le coulissement d'une tige pointue dans un perçage axial de l'axe.

Selon un mode de réalisation de la présente invention, l'évidement radial de la pièce mobile est un chanfrein du côté opposé du bouton d'affichage.

Selon un mode de réalisation de la présente invention, la tige pointue est un clou et l'alésage axial de l'axe débouche dans une zone accessible de l'extérieur.

Ces objets, caractéristiques et avantages ainsi que d'autres de la présente invention seront exposés en détail dans la description suivante de modes de réalisation particuliers faite en relation avec les figures jointes parmi lesquelles :
les figures 1A et 1B, précédemment décrites, représentent deux vues partielles en coupe d'un mécanisme classique à affichage doux dans une position de repos ;
les figures 2A et 2B, pré précédemnent décrites, représentent le mécanisme des figures 1A et 1B dans une position de travail ;
les figures 3A et 3B représentent un mécanisme à affichage doux muni d'un mode de réalisation de dispositif de blocage selon l'invention, respectivement dans les positions des figures 1A et 2A ; et
la figure 3C représente le dispositif de blocage des figures 3A et 3B dans une configuration active.

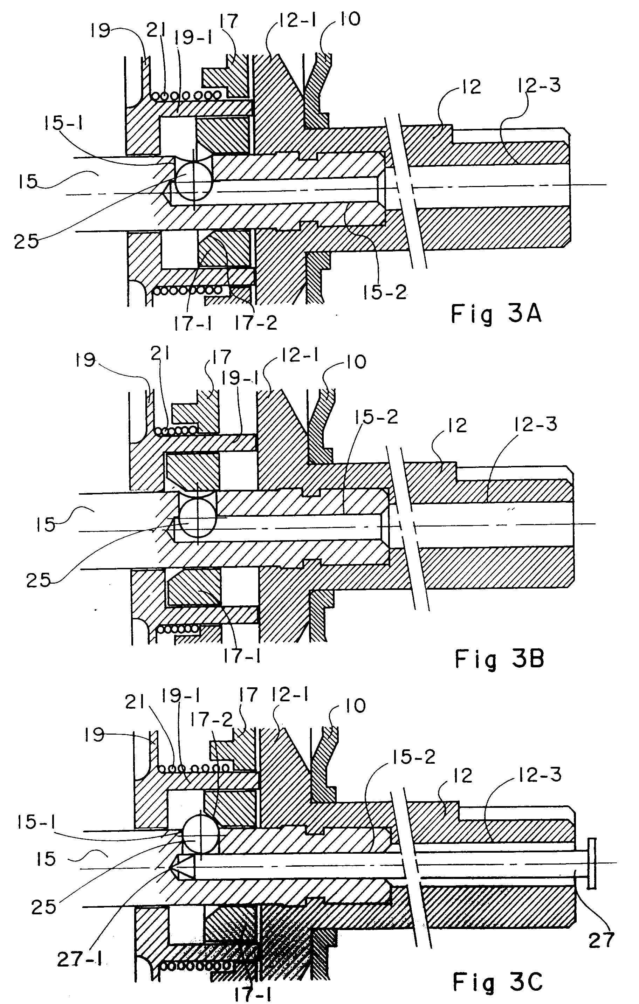

Dans les figures 3A à 3C, on retrouve des mêmes éléments qu'aux figures 1A et 2A, désignés par des mêmes références. La présente invention propose, pour rendre blocable de manière réversible un mécanime à affichage doux du type précédemment décrit en relation avec les figures 1A et 2A, de modifier de manière simple les axes 12, 15 et le palier 17-1 du disque 17.

Selon l'invention, l'axe 15 est muni d'un alésage radial 15-1 qui, dans la position de repos de la figure 3A (correspondant à la position de la figure 1A où le disque 17 est plaqué contre le flasque 12-2), est sensiblement aligné avec la face du palier 17-1, du côté opposé au flasque 12-1. Un perçage axial 15-2 de l'axe 15 rencontre l'alésage 15-1 et débouche dans un perçage axial 12-3 de l'axe 12. Le perçage 12-3 est de diamètre plus grand que le perçage 15-2 et débouche à l'extrémité apparente de l'axe 12.

Dans l'alésage 15-1, de diamètre supérieur à celui du perçage 15-2, est disposée une bille 25 pouvant se déplacer librement dans cet alésage. Dans la position de repos de la figure 3A, la partie du palier 17-1 se trouvant au niveau de la bille 25 comprend un chanfrein intérieur 17-2 autorisant la bille 25, toujours dans cette position de repos, à faire saillie latéralement par rapport à l'axe 15.

Les figures 3A et 3B représentent le mécanisme de blocage de l'invention dans une configuration inactive. Il autorise un libre coulissement du palier 17-1 de la position de repos de la figure 3A vers la position de travail de la figure 3B (correspondant à la position de la figure 2A). Si par hasard, dans la figure 3A, la bille se trouve en saillie par rapport à l'axe 15, par exemple par gravité, celle-ci est immédiatement repoussée vers l'intérieur de l'alésage 15-1 par le chanfrein 17-2 lorsque le palier 17-1 se déplace vers la position de travail de la figure 3B.

La longueur du palier 17-1 et/ou la position de l'alésage 15-1 est choisie de manière que la bille 25 ne puisse pas s'échapper de l'alésage 15-1, quelle que soit la position du palier 17-1 parmi ses positions possibles.

La figure 3C représente le mécanisme de blocage dans une configuration active. Pour bloquer le mécanisme à affichage doux dans sa position de repos de la figure 3A, il suffit, dans cette position de repos, d'insérer une tige 27 comportant une extrémité pointue 27-1, telle qu'un clou, dans les perçages 12-3 et 15-2. L'extrémité pointue 27-1, qui est par exemple conique, repousse la bille 25 en dehors de l'alésage 15-1, d'où il résulte que la bille bloque le passage du palier 17-1 vers la position de travail de la figure 3B. La bille 25 peut être repoussée par l'extrémité pointue 27-1, quelle que soit sa position dans l'alésage 15-1, car le diamètre de la bille est supérieur à celui du perçage 15-2. De préférence, le diamètre de la tige 27 est sensiblement égal au diamètre du perçage 15-2. Les diamètres de la bille 25, du perçage 15-2, et du chanfrein 17-2 peuvent être choisis pour que, dans la position de la figure 3C, la bille 25 vienne en contact avec le chanfrein 17-2. Toutefois, la présence de jeu entre la bille 25 et le chanfrein 17-2 n'est pas gênante pourvu que le palier 17-1 ne puisse pas rejoindre sa position de travail de la figure 3B.

L'insertion d'une tige 27 dans les perçages 15-2 et 12-3 est particulièrement facile et pratique car ces derniers sont facilement accessibles de l'extérieur de la machine montée. En effet, le bouton de programmateur, destiné à être monté sur l'extrémité de l'axe 12, peut généralement être retiré par simple traction. On peut également envisager de munir le bouton d'un orifice en face du perçage 12-3.

Le mécanisme de blocage est inactivé aussitôt que l'on retire la tige 27.

## Revendications

1. Programmateur à affichage doux comprenant :
- un bouton d'affichage (12) guidé en rotation par un axe (15) ;
- une pièce (17) mobile coulissant sur ledit axe (15) et couplée en rotation au mécanisme rotatif du programmateur ;
- un ressort (21) sollicitant la pièce mobile (17) vers une position de repos où la pièce mobile est couplée en rotation au bouton d'affichage (12) ; et
- un système à rampes (12-2) associé au bouton d'affichage et à la pièce mobile pour séparer la pièce mobile du bouton d'affichage lorsque le bouton d'affichage est entraîné en rotation dans un sens prédéterminé, de manière que le bouton d'affichage n'est alors plus couplé en rotation à la pièce mobile ;
caractérisé en ce qu'il comprend une bille (25) librement mobile dans un alésage radial (15-1) de l'axe du bouton d'affichage et susceptible d'être poussée, sans qu'elle sorte complètement de l'alésage radial, dans un évidement radial (17-2) de la pièce mobile par le coulissement d'une tige pointue (27) dans un perçage axial (15-2) de l'axe.

2. Programmateur selon la revendication 1, caractérisé en ce que l'évidement radial (17-2) de la pièce mobile est un chanfrein du côté opposé du bouton d'affichage.

3. Programmateur selon la revendication 1, caractérisé en ce que la tige pointue (27) est un clou et en ce que l'alésage axial (12-3) de l'axe débouche dans une zone accessible de l'extérieur.
